# EUROPEAN PATENT APPLICATION

(11) **EP 4 641 793 A1**
(43) Date of publication of application: **29.10.2025**
(21) Application number: 24777717.0
(22) Date of filing: 13.03.2024
(51) Int. Cl.: H01M 50/244, H01M 50/30, H01M 50/242, H01M 50/258, H01M 50/249, H01M 50/213, H01M 50/59, H01M 10/658

(54) **SUPPORT ASSEMBLY, BATTERY PACK, AND VEHICLE**

(30) Priority: 31.03.2023 CN 202320802128 U
(71) Applicant: BYD Company Limited, Shenzhen, Guangdong 518118 (CN)
(72) Inventor: YU, Peiwen, Shenzhen, Guangdong 518118 (CN); TAN, Jing, Shenzhen, Guangdong 518118 (CN); NIE, Chengming, Shenzhen, Guangdong 518118 (CN); XIE, Yiming, Shenzhen, Guangdong 518118 (CN); ZHAI, Jian, Shenzhen, Guangdong 518118 (CN)
(74) Representative: Wu, Ting
(86) International application number: PCT/CN2024/081287
(87) International publication number: WO 2024/198927

(57) **Abstract**

This application discloses a holder assembly (100), a battery pack (202), and a vehicle (200). The holder assembly (100) includes an insulated holder (20) and a connecting bottom plate (30), where the insulated holder (20) includes accommodating grooves (21) and exhaust channels (22) in communication with the accommodating grooves (21), the accommodating groove (21) is used for arrangement of a battery cell (10), the exhaust channel (22) is adapted to correspond to explosion-proof valves of the battery cells (10), the connecting bottom plate (30) is connected to the insulated holder (20), and the connecting bottom plate (30) closes the exhaust channel (22) on a side, away from the battery cell (10), of the insulated holder (20).

## Description

### PRIORITY INFORMATION

This application claims priority to and benefits of patent application No. 202320802128.4, filed with the China National Intellectual Property Administration on March 31, 2023, which is incorporated herein as reference in its entirety.

### TECHNICAL FIELD

This application relates to the technical field of vehicles, and in particular, to a holder assembly, a battery pack, and a vehicle.

### BACKGROUND

At present, a holder assembly is formed by combining a plurality of cylindrical battery cells in a specific arrangement. An upper end of the battery cell in the holder assembly needs to be filled with an adhesive to insulate high-voltage and low-voltage connections from an upper metal cover, and a lower end of the battery cell is insulated from a metal bottom plate through a bottom insulated holder. However, in related technologies, when an adhesive is filled into a battery pack, polyurethane foam may overflow into an exhaust channel along a gap between the metal bottom plate and the insulated holder, causing the polyurethane foam to block the exhaust channel. As a result, when the battery is in thermal runaway under an extreme working condition, heat cannot be discharged in time, causing a safety problem.

### SUMMARY

Implementations of this application provide a holder assembly, a battery pack, and a vehicle.

A holder assembly in an implementation of this application is applied to a battery pack. The holder assembly includes an insulated holder and a connecting bottom plate, where the insulated holder includes accommodating grooves and exhaust channels in communication with the accommodating grooves, the accommodating groove is used for arrangement of a battery cell, and the exhaust channel is adapted to correspond to an explosion-proof valve of the battery cell, the connecting bottom plate is connected to the insulated holder, and the connecting bottom plate closes the exhaust channel on a side, away from the battery cell, of the insulated holder.

The holder assembly in the implementation of this application is applied to the battery pack. The holder assembly includes the insulated holder and the connecting bottom plate, where the insulated holder includes the accommodating grooves and the exhaust channels in communication with the accommodating grooves, the accommodating groove is used for the arrangement of the battery cell, and the exhaust channel is adapted to correspond to the explosion-proof valve of the battery cell, the connecting bottom plate is connected to the insulated holder, and the connecting bottom plate closes the exhaust channel on the side, away from the battery cell, of the insulated holder. In this way, the added connecting bottom plate may close the exhaust channel from below, which prevents an adhesive from entering the exhaust channel directly from below the insulated holder, and also prevents the adhesive from entering the exhaust channel from a gap between the battery cell and the insulated holder, thereby ensuring that the explosion-proof valve can be opened and heat can be smoothly discharged through the exhaust channel, and improving safety performance of the holder assembly.

In some implementations, the exhaust channels include vertical channels and horizontal channels in communication with the vertical channels, the vertical channels are in one-to-one correspondence with the accommodating grooves, the vertical channels are in communication with the accommodating grooves, and the plurality of the vertical channels are in communication with the horizontal channels. In this way, the explosion-proof valve may exactly face the vertical channel. When the explosion-proof valve is opened to release pressure in an emergency, heat may enter the horizontal channel along the vertical channel and be discharged from the horizontal channel to an external environment, ensuring safe use of the holder assembly.

In some implementations, the insulated holder further includes gap holes, along an arrangement direction of the insulated holder and the connecting bottom plate, the gap hole penetrates through the insulated holder, and the gap hole is correspondingly disposed in a gap between adjacent battery cells. In this way, during filling of the adhesive, the adhesive may flow through and fill gaps and the gap holes in turn. After the adhesive solidifies, polyurethane foam may be formed to wrap the battery cells as a buffer layer to protect the battery cells.

In some implementations, the connecting bottom plate includes aperture regions, along the arrangement direction of the insulated holder and the connecting bottom plate, the aperture region penetrates through the connecting bottom plate, and the aperture region is in communication with the gap hole. In this way, the aperture regions are disposed corresponding to the gap holes. During filling of the adhesive, the adhesive flows through and fills the gaps between the battery cells, the gap holes, and the aperture regions in turn. After the adhesive solidifies, polyurethane foam may be formed to wrap the battery cells as a buffer layer to protect the battery cells. Meanwhile, the polyurethane foam may bond the battery cells and a lower box assembly together to ensure stability of the holder assembly.

In some implementations, an area of the aperture region is greater than or equal to that of the gap hole. In this way, the area of the aperture region is greater than or equal to that of the gap hole, so that after the adhesive enters the aperture region, the adhesive solidifies and then polyurethane foam may be formed, and the lower box assembly may have a large bonding area, thereby improving stability of the entire battery pack.

In some implementations, neither the gap hole nor the aperture region is in communication with the exhaust channel. In this way, the polyurethane foam may fill the gaps between the battery cells, the aperture regions, and the gap holes without entering the exhaust channels.

In some implementations, the insulated holder further includes a plurality of protrusions. The adjacent protrusions cooperate to form the accommodating grooves, and the gap hole is formed on the protrusion. In this way, during preparation of the insulated holder, the accommodating grooves may be formed by preparing the protrusions, so that the accommodating grooves have high size accuracy and can just accommodate the battery cells. The protrusions may limit and fasten the battery cells to ensure overall stability of the battery pack.

In some implementations, the connecting bottom plate is a thermal insulation plate and/or an electrical insulation plate. In this way, the connecting bottom plate may simultaneously play the functions of heat isolation and electrical insulation, to prevent high-temperature substances from being sprayed onto the connecting bottom plate and prevent heat from being transferred to the lower box assembly, causing the lower box assembly to be burned or perforated, when the battery cell is in thermal runaway. Meanwhile, the connecting bottom plate may further increase electrical gaps, protecting the battery cells from dangers such as short circuits.

In some implementations, a size of the accommodating groove is the same as that of the battery cell. In this way, the battery cell may be stably installed in the accommodating groove.

A battery pack in an implementation of this application includes battery cells and the holder assembly as described in any one of the foregoing implementations. The battery cells are disposed on the holder assembly.

In some implementations, the battery pack further includes a lower box assembly. The connecting bottom plate includes a first side and a second side facing away from each other. The first side faces the explosion-proof valves. The second side faces an upper surface of the lower box assembly. The lower box assembly includes a supporting surface. The supporting surface is attached to the second side. Flatness of the supporting surface is less than or equal to 3 mm. In this way, the first side cooperates with the insulated holder to close the exhaust channel. The second side may cooperate with the lower box assembly to ensure close attachment, avoiding formation of a gap between the connecting bottom plate and the lower box assembly or the insulated holder. The flatness of the supporting surface is less than or equal to 3 mm, so that the supporting surface has good flatness and may be closely attached to the second side to avoid the formation of the gap.

In some implementations, the battery pack further includes polyurethane foam. The polyurethane foam is filled in the gap holes, the aperture regions, and the gaps between the adjacent battery cells. In this way, after the battery cell is installed in the accommodating groove, the adhesive may be filled, and the polyurethane foam may be formed after solidification, so that the polyurethane foam may be filled around the battery cell to wrap the battery cell. The polyurethane foam may absorb external impact and vibration to prevent the battery cell from being damaged. Meanwhile, the polyurethane foam has a specific viscosity, and may bond the battery cells, the insulated holder, and the connecting bottom plate onto the lower box assembly, to ensure stability of the holder assembly.

A vehicle in an implementation of this application includes the battery pack according to the foregoing implementations.

In a holder assembly and a vehicle in implementations of this application, the holder assembly is applied to a battery pack. The holder assembly includes an insulated holder and a connecting bottom plate. The insulated holder includes accommodating grooves and exhaust channels in communication with the accommodating grooves. The accommodating groove is used for the arrangement of a battery cell. The exhaust channel is adapted to correspond to an explosion-proof valve of the battery cell, the connecting bottom plate is connected to the insulated holder, and the connecting bottom plate closes the exhaust channel on a side, away from the battery cell, of the insulated holder. In this way, the added connecting bottom plate may close the exhaust channel from below, which prevents an adhesive from entering the exhaust channel directly from below the insulated holder, and also prevents the adhesive from entering the exhaust channel from a gap between the battery cell and the insulated holder, thereby ensuring that the explosion-proof valve can be opened and heat can be smoothly discharged through the exhaust channel, and improving safety performance of the holder assembly.

Additional aspects and advantages of this application are set forth in part in the following description, and in part become apparent from the following description, or may be learned through the practice of this application.

### DESCRIPTION OF DRAWINGS

The foregoing and/or additional aspects and advantages of this application will become apparent and easily understood from the description of implementations with reference to the following drawings, in which:
FIG. 1 is a diagram of an exploded structure of a battery pack according to an implementation of this application;
FIG. 2 is a diagram of a partial structure of a holder assembly according to an implementation of this application;
FIG. 3 is a diagram of another partial structure of a holder assembly according to an implementation of this application;
FIG. 4 is a diagram of a partial cross-sectional structure of a holder assembly according to an implementation of this application;
FIG. 5 is a diagram of another partial cross-sectional structure of a holder assembly according to an implementation of this application; and
FIG. 6 is a diagram of a vehicle according to an implementation of this application.

### Reference numerals:

holder assembly: 100; battery cell: 10; insulated holder: 20; accommodating groove: 21; exhaust channel: 22; vertical channel: 221; horizontal channel: 222; gap hole: 23; protrusion: 24; connecting bottom plate: 30; first side: 31; second side: 32; aperture region: 33; lower box assembly: 40; supporting surface: 41; polyurethane foam: 50; upper sealing cover: 60; vehicle: 200; vehicle body: 201; battery pack: 202.

### DETAILED DESCRIPTION

Implementations of this application are described in detail below, examples of which are shown in the accompanying drawings, where same or similar reference numerals throughout represent same or similar elements or elements having same or similar functions. The implementations described below with reference to the accompanying drawings are exemplary and are merely used to explain this application, and shall not be construed as a limitation on this application.

In this application, unless otherwise clearly specified and limited, a first feature being "above" or "below" a second feature may include the first and second features being in direct contact with each other, or the first and second features not being in direct contact with each other but being in contact with each other through another feature between the first and second features. Moreover, the first feature being "on" or "above" the second feature includes the first feature being directly above or obliquely above the second feature, or simply means that the first feature has a higher level than the second feature. The first feature being "under" or "below" the second feature includes the first feature being directly under or obliquely under the second feature, or simply means that the first feature has a lower level than the second feature.

The following disclosure provides many different implementations or examples to implement different structures of this application. To simplify the disclosure of this application, components and settings for specific examples are described below. Certainly, they are merely examples and are not intended to limit this application. In addition, reference numerals and/or reference letters may be repeated in different examples in this application, which is for the purpose of simplicity and clarity, and does not indicate relationships between the various implementations and/or settings discussed. In addition, this application provides examples of various specific processes and materials, but person of ordinary skill in the art may be aware of the application of other processes and/or the use of other materials.

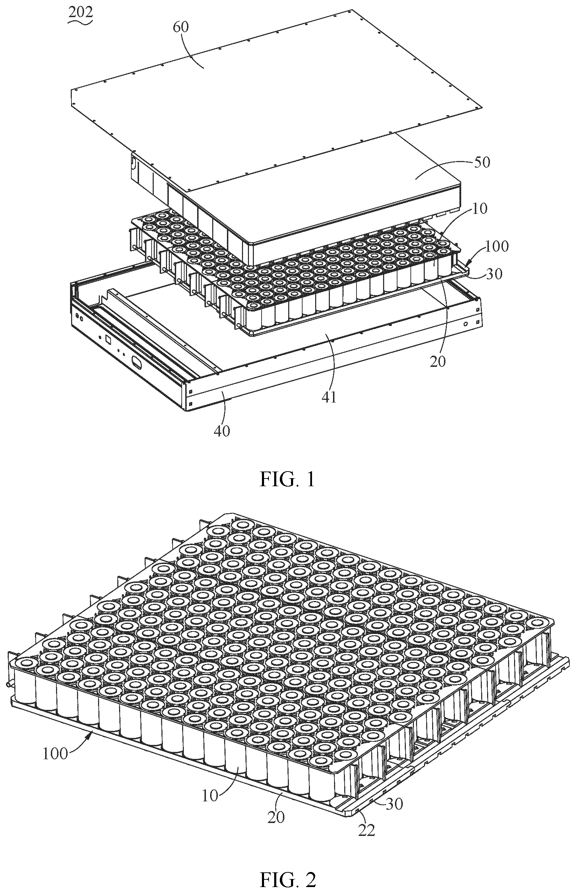

Refer to FIG. 1. A battery pack 202 in an implementation of this application includes a holder assembly 100 in an implementation of this application. The battery pack 202 is disposed on a vehicle 200. The battery pack 202 includes a plurality of battery cells 10 as carriers for energy storage. Each battery cell 10 includes an explosion-proof valve (not shown in the figure) disposed at the bottom of the battery cell 10.

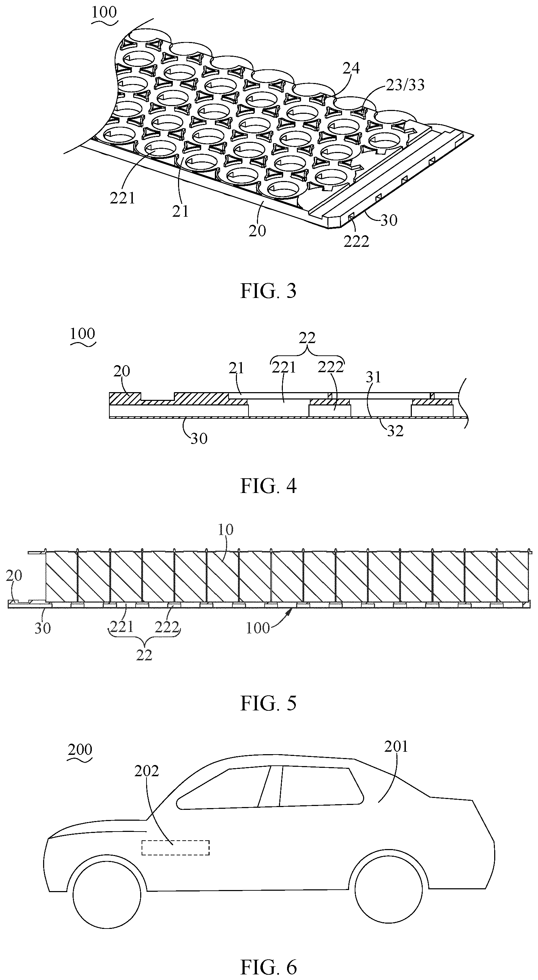

Refer to FIG. 2 and FIG. 3. The holder assembly 100 in the implementation of this application is applied to a battery pack 202. The holder assembly 100 includes an insulated holder 20 and a connecting bottom plate 30. The insulated holder 20 includes accommodating grooves 21 and exhaust channels 22 in communication with the accommodating grooves 21. The accommodating groove 21 is used for the arrangement of a battery cell 10. The exhaust channel 22 is adapted to correspond to an explosion-proof valve of the battery cell 10. The connecting bottom plate 30 is connected to the insulated holder 20. The connecting bottom plate 30 closes the exhaust channel 22 on a side, away from the battery cell 10, of the insulated holder 20.

The holder assembly 100 in the implementation of this application is applied to the battery pack 202. The holder assembly 100 includes the insulated holder 20 and the connecting bottom plate 30. The insulated holder 20 includes the accommodating grooves 21 and the exhaust channels 22 in communication with the accommodating grooves 21. The accommodating groove 21 is used for the arrangement of the battery cell 10. The exhaust channel 22 is adapted to correspond to the explosion-proof valve of the battery cell 10. The connecting bottom plate 30 is connected to the insulated holder 20. The connecting bottom plate 30 closes the exhaust channel 22 on the side, away from the battery cell 10, of the insulated holder 20. In this way, the added connecting bottom plate 30 may close the exhaust channel 22 from below, which prevents an adhesive from entering the exhaust channel 22 directly from below the insulated holder 20, and also prevents the adhesive from entering the exhaust channel 22 from a gap between the battery cell 10 and the insulated holder 20, thereby ensuring that the explosion-proof valve can be opened and heat can be smoothly discharged through the exhaust channel 22, and improving safety performance of the holder assembly 100.

In related technologies, a vehicle employs large cylindrical batteries whose explosion-proof valves facing downward and positive and negative electrodes facing upward. Meanwhile, battery cells are insulated from an upper metal cover by filling an adhesive at upper ends. An insulated holder is disposed at lower ends of the batteries to support and fasten the battery cells. The insulated holder cooperates with a lower box to form heat diffusion and exhaust channels. When one battery is in thermal runaway under an extreme operating condition, the explosion-proof valve may be opened by high-temperature and high-pressure substances generated inside the battery cell to release pressure in time, and heat may be discharged to the outside of the pack through smoke exhaust channels of a plastic holder, ensuring that the battery and a pack body do not catch fire or explode. However, at present, due to a flatness tolerance, the insulated holder and a large surface of a metal bottom plate cannot be completely and closely attached, and a gap may be reserved. Meanwhile, to ensure reliable insulation between high-voltage and low-voltage connections at the upper end of the battery cell and the upper metal cover, the adhesive filled cannot have a too high viscosity and requires a specific fluidity. Therefore, if the foregoing gap is too large, the filled adhesive may overflow into the gap, and the overflowed adhesive blocks the exhaust channel of the plastic holder. When the battery is in thermal runaway under an extreme operating condition, heat cannot be discharged, causing a thermal safety accident.

In the implementation of this application, the connecting bottom plate 30 is disposed between the insulated holder 20 and the lower box assembly 40. The connecting bottom plate 30 may be attached to the lower box assembly 40. The insulated holder 20 cooperates with the connecting bottom plate 30 to form exhaust channels 22. In this way, a basic action of discharging heat by the explosion-proof valve may be implemented without changing a basic structure of the existing insulated holder 20, and the adhesive may be prevented from entering the exhaust channels 22 through the gap during filling of the adhesive.

Refer to FIG. 2 and FIG. 3. In some implementations, a size of the accommodating groove 21 is the same as that of the battery cell 10. That is, the size of the accommodating groove 21 is the same as that of the battery cell 10. In this way, the battery cell 10 may be stably installed in the accommodating groove 21. In this way, the battery cell 10 may be assembled on the insulated holder 20 to ensure a stable connection. Meanwhile, the exhaust channel 22 may be in communication with the accommodating groove 21, that is, when the battery cell 10 is disposed in the accommodating groove 21, it may be ensured that the explosion-proof valve at the lower end of the battery cell 10 exactly faces the exhaust channel 22, and even a part of the battery cell 10 and a part of the explosion-proof valve may be accommodated in the exhaust channel 22. In this way, the adhesive may be prevented from entering the exhaust channel 22 through the gap between the battery cell 10 and the insulated holder 20 during filling of the adhesive, thereby ensuring safe use of the holder assembly 100. In addition, in the implementation of this application, quantities of the battery cells 10 and the accommodating grooves 21 are not limited, and specific sizes and shapes of the battery cells 10 are not limited. As long as the quantity of the battery cells 10 corresponds to that of the accommodating grooves 21, the battery cells 10 may be adjusted according to a model of the holder assembly 100 to meet different requirements.

Furthermore, in some implementations, a size of the connecting bottom plate 30 may be consistent with that of the insulated holder 20, so that the connecting bottom plate 30 may cover the insulated holder 20 on one side, and therefore, projections of the insulated holder 20 and the connecting bottom plate 30 onto the lower box assembly 40 overlap, ensuring that a space occupied by the entire holder assembly 100 in the vehicle 200 remains consistent. Certainly, in some other implementations, the connecting bottom plate 30 may be formed by a plurality of smaller bottom plates spliced together. For example, the connecting bottom plate 30 may be formed by four equal-sized rectangular bottom plates spliced together, which may further improve flatness and preparation accuracy of the rectangular bottom plates, so that the lower box assembly 40 and the connecting bottom plate 30 can be attached more closely.

In some implementations, the connecting bottom plate 30 can be thermally insulated and electrically insulated, that is, the connecting bottom plate 30 is a thermal insulation plate and/or an electrical insulation plate. In this way, the connecting bottom plate 30 may simultaneously play the functions of heat isolation and electrical insulation, to prevent high-temperature substances from being sprayed onto the connecting bottom plate 30 and prevent heat from being transferred to the lower box assembly 40, causing the lower box assembly 40 to be burned or the lower box assembly 40 to be perforated, when the battery cell 10 is in thermal runaway. Meanwhile, the connecting bottom plate 30 may further increase an electrical gap, protecting the battery cells 10 from dangers such as insulation failure.

Specifically, the connecting bottom plate 30 may be a thermal insulation plate, or the connecting bottom plate 30 may be an electrical insulation plate, or the connecting bottom plate 30 may be a thermal insulation plate and an electrical insulation plate at the same time. In implementations of this application, specific materials of the connecting bottom plate 30 and the insulated holder 20 are not limited, to meet different requirements. For example, the connecting bottom plate 30 may be a mica board, or the connecting bottom plate 30 may be made of materials such as plastic, resin, or rubber. The insulated holder 20 may be a plastic holder or made of other insulating materials.

Refer to FIG. 3 and FIG. 4. In some implementations, the exhaust channels 22 include vertical channels 221 and horizontal channels 222 in communication with the vertical channels 221. The vertical channels 221 are in one-to-one correspondence with the accommodating grooves 21. The vertical channels 221 are in communication with the accommodating grooves 21. The plurality of vertical channels 221 are in communication with the horizontal channels 222.

In this way, the explosion-proof valve may exactly face the vertical channel 221. When the explosion-proof valve is opened to release pressure in an emergency, heat may enter the horizontal channel 222 along the vertical channel 221 and be discharged from the horizontal channel 222 to an external environment, ensuring safe use of the holder assembly 100.

Specifically, the exhaust channels 22 may include vertical channels 221 and horizontal channels 222. The vertical channels 221 are in communication with the accommodating grooves 21 and are consistent with the accommodating grooves 21 in quantity, thereby ensuring that each battery cell 10 may correspond to one accommodating groove 21 and one vertical channel 221, and the vertical channels 221 in the same row are connected in series through the horizontal channel 222. Therefore, when thermal runaway occurs, the explosion-proof valve of each battery cell 10 may be opened, so that the heat may be discharged to the horizontal channel 222 through the vertical channel 221, and discharged to the external environment through the horizontal channel 222, ensuring safe use of the holder assembly 100. When one battery cell 10 in one row is in thermal runaway, heat may also be timely discharged through the vertical channel 221 and the horizontal channel 222, and the discharge process does not affect thermal safety of the battery cells 10 in other rows.

Refer to FIG. 3. In some implementations, the insulated holder 20 further includes a plurality of protrusions 24. The adjacent protrusions 24 cooperate with each other to form accommodating grooves 21. A gap hole 23 is formed on the protrusion 24.

In this way, during preparation of the insulated holder 20, the accommodating grooves 21 may be formed by preparing the protrusions 24, so that the accommodating grooves 21 have high size accuracy and can just accommodate the battery cells 10. The protrusions 24 can limit and fasten the battery cells 10 to ensure overall stability of the battery pack 202.

Refer to FIG. 2 to FIG. 4. In some implementations, the connecting bottom plate 30 is disposed on a side, away from the battery cell 10, of the insulated holder 20, and the connecting bottom plate 30 closes the exhaust channel 22 from the side, away from the battery cell 10, of the insulated holder 20.

In this way, the connecting bottom plate 30 may be attached to the lower box assembly 40, and the connecting bottom plate 30 and the insulated holder 20 are tightly attached to prevent the adhesive from entering the gap between the connecting bottom plate 30 and the insulated holder 20 during filling of the adhesive and blocking the exhaust channel 22. Meanwhile, the connecting bottom plate 30 may be connected to the insulated holder 20 from the bottom of the insulated holder 20, and then the exhaust channel 22 that is semi-exposed originally may be closed, so that heat can enter the vertical channel 221 only through an inlet at which the accommodating groove 21 is located, and then be discharged from an outlet to an external environment after passing through the horizontal channel 222.

Specifically, when the insulated holder 20 does not cooperate with the lower box assembly 40 or the connecting bottom plate 30, the exhaust channel 22 is in a semi-open slot state, which is beneficial to preparation and structural forming of the insulated holder 20. During actual assembly, the connecting bottom plate 30 and the insulated holder 20 need to be connected together first, and then the connecting bottom plate 30 is installed on the lower box assembly 40, thereby ensuring that no gap is formed between the connecting bottom plate 30 and the insulated holder 20 and between the connecting bottom plate 30 and the lower box assembly 40. After the insulated holder 20 and the connecting bottom plate 30 are connected, the exhaust channel 22 is in a semi-closed state. Only the inlet of the exhaust channel 22 is in communication with the battery cell 10, and the outlet is in communication with the external environment, ensuring that heat does not appear in other positions.

Refer to FIG. 5, in some implementations, the connecting bottom plate 30 and the insulated holder 20 are connected by an adhesive layer.

In this way, the connecting bottom plate 30 and the insulated holder 20 may be tightly connected together by the adhesive layer, to prevent the adhesive from entering the exhaust channel 22 through a gap between the connecting bottom plate 30 and the insulated holder 20 during filling of the adhesive. Meanwhile, integrity of the connecting bottom plate 30 and the insulated holder 20 is improved. During an assembly process, the connecting bottom plate 30 and the insulated holder 20 may be connected together by the adhesive layer first, and then the connecting bottom plate 30 and the insulated holder 20 may be assembled together on the lower box assembly 40, which simplifies the assembly process.

Furthermore, refer to FIG. 1 and FIG. 4. In some implementations, the battery pack 202 further includes a lower box assembly 40. The connecting bottom plate 30 includes a first side 31 and a second side 32 facing away from each other. The first side 31 faces the explosion-proof valve. The second side 32 faces an upper surface of the lower box assembly 40.

In this way, the first side 31 cooperates with the insulated holder 20 to close the exhaust channel 22. The second side 32 may cooperate with the lower box assembly 40 to ensure close attachment, avoiding formation of a gap between the connecting bottom plate 30 and the lower box assembly 40 or the insulated holder 20.

Specifically, the first side 31 may be connected to the insulated holder 20 by an adhesive layer. The second side 32 may also be positioned and connected by an adhesive layer. Certainly, in implementations of this application, the connection may be performed in other ways. For example, positioning and connection may be achieved through threads or buckling to meet different requirements.

Refer to FIG. 1 and FIG. 2. In some implementations, the lower box assembly 40 includes a supporting surface 41. The supporting surface 41 is attached to the second side 32. Flatness of the supporting surface 41 is less than or equal to 3 mm.

In this way, the flatness of the supporting surface 41 is less than or equal to 3 mm, so that the supporting surface 41 has good flatness and may be closely attached to the second side 32 to avoid the formation of a gap.

Specifically, the supporting surface 41 is directly attached to the second side 32. To ensure a close attachment, the supporting surface 41 needs to have high flatness accuracy, thereby avoiding the formation of the gap. In implementations of this application, materials of the lower box assembly 40 are not limited, to meet different requirements. The lower box assembly 40 made of different materials have different requirements on flatness, so that it is only necessary to ensure that the supporting surface 41 and the second side 32 may be closely attached without forming a gap. In one example, the lower box assembly 40 may be made of aluminum, and flatness of the supporting surface 41 is less than or equal to 3 mm. In other examples, the lower box assembly 40 may be made of other materials, such as steel or composite materials, and in this case, requirements on flatness are different.

Refer to FIG. 2 and FIG. 3. In some implementations, the insulated holder 20 further includes gap holes 23. Along an arrangement direction of the insulated holder 20 and the connecting bottom plate 30, the gap hole 23 penetrates through the insulated holder 20. The gap hole 23 is correspondingly disposed in a gap between adjacent battery cells 10.

In this way, during filling of the adhesive, the adhesive may flow through and fill the gaps and the gap holes 23 in turn. After the adhesive solidifies, polyurethane foam 50 may be formed to wrap the battery cells 10 as a buffer layer to protect the battery cells 10.

Furthermore, refer to FIG. 2 and FIG. 3. In some implementations, the connecting bottom plate 30 includes aperture regions 33. Along the arrangement direction of the insulated holder 20 and the connecting bottom plate 30, the aperture region 33 penetrates through the connecting bottom plate 30, and the aperture region 33 is in communication with the gap hole 23.

In this way, the aperture regions 33 are disposed corresponding to the gap holes 23. During filling of the adhesive, the adhesive flows through and fills the gaps between the battery cells 10, the gap holes 23, and the aperture regions 33 in turn. After the adhesive solidifies, polyurethane foam 50 may be formed to wrap the battery cells 10 as a buffer layer to protect the battery cells 10. Meanwhile, the polyurethane foam 50 may bond the battery cells 10 and the lower box assembly 40 together to ensure stability of the holder assembly 100.

Furthermore, refer to FIG. 2 and FIG. 3. In some implementations, an area of the aperture region 33 is greater than or equal to that of the gap hole 23. In this way, the area of the aperture region 33 is greater than or equal to that of the gap hole 12, so that after the adhesive enters the aperture region 33, the polyurethane foam 50 may be formed after the adhesive solidifies, and the lower box assembly 40 may have a large bonding area, thereby improving stability of the entire battery pack 202.

Specifically, in one implementation, an area of the aperture region 33 may be larger than that of the gap hole 12. In another implementation, an area of the aperture region 33 may also be equal to that of the gap hole 12, so that the adhesive forms polyurethane foam 50 after entering the aperture region 33 and the gap hole 12.

Refer to FIG. 1. In some implementations, the battery pack 202 further includes polyurethane foam 50. The polyurethane foam 50 is filled in the gap holes 23, the aperture regions 33, and the gaps between the adjacent battery cells 10.

In this way, after the battery cells 10 are mounted in the accommodating groove 21, the adhesive may be filled and forms the polyurethane foam 50 after solidification, so that the polyurethane foam 50 may be filled around the battery cells 10 to wrap the battery cells 10. The polyurethane foam 50 may absorb external impact and vibration to prevent the battery cells 10 from being damaged. Meanwhile, the polyurethane foam 50 has a specific viscosity, and may bond the battery cells 10, the insulated holder 20, and the connecting bottom plate 30 onto the lower box assembly 40, to ensure stability of the holder assembly 100.

Specifically, in implementations of this application, the battery cell 10 may be cylindrical, and the plurality of battery cells 10 may be arranged in a staggered array according to a specific arrangement rule, and there may be a triangular gap between adjacent battery cells 10. Certainly, depending on a different arrangement method, there may be a star-shaped gap between adjacent battery cells 10. The gap hole 23 and the aperture region 33 may be aligned with the triangular gap between the different battery cells 10, then an adhesive may be bonded to the lower box assembly 40 by filling the whole pack with the adhesive, and an upper end of the battery cell 10 is bonded to an upper sealing cover 60. After the adhesive solidifies, polyurethane foam 50 is formed. The polyurethane foam 50 may be filled in the gaps between the battery cells 10, the aperture regions 33, and the gap holes 23, and bonded to the lower box assembly 40, so that the battery cells 10, the insulated holder 20, and other elements inside the holder assembly 100 may be fastened by the polyurethane foam 50. In this way, the polyurethane foam 50 may be connected to the battery cells 10, the insulated holder 20, the connecting bottom plate 30, and the lower box assembly 40 to form a whole. The polyurethane foam 50 further has the properties of absorbing external impact and insulation, ensuring overall connection strength and safety insulation performance.

Refer to FIG. 3 and FIG. 4. In some implementations, neither the gap hole 23 nor the aperture region 33 is in communication with the exhaust channel 22. In this way, the polyurethane foam 50 may be filled in the gaps between the battery cells 10, the aperture regions 33, and the gap holes 23 without entering the exhaust channels 22.

Furthermore, in some implementations, the insulated holder 20 and the connecting bottom plate 30 may be bonded together first, then an adhesive may be applied to the accommodating grooves 21, the battery cells 10 are then assembled in the accommodating grooves 21, and then a cold plate, a top plastic holder, the high-voltage and low-voltage pre-fastening elements, and the like are installed. Second, high-voltage and low-voltage welding is performed on the top. Finally, the battery cells 10 are placed on the lower box assembly 40, filled with the polyurethane foam 50, and closed by the upper sealing cover 60, and pressure is maintained. The polyurethane foam 50 flows through the battery cell 10 and is bonded to the supporting surface 41 of the lower box assembly 40, and foams at a specific proportion. A height of the polyurethane foam 50 gradually exceeds those of high-voltage and low-voltage connections at the top of the battery cell 10, and finally, the polyurethane foam is in contact with and bonded to the upper sealing cover 60.

In some implementations, when the holder assembly 100 is an 800V high-voltage platform, the connecting bottom plate 30 may ensure reliable insulation of electrical gaps in a vertical direction while ensuring high volume utilization from the battery cells 10 to the system. The polyurethane foam 50 immerses the high-voltage connection, greatly reducing a risk of insulation failure of a pack body with low electrical conductivity and thermal conductivity. In addition, such a connection and assembly method may effectively prevent the polyurethane foam 50 from overflowing into the exhaust channels 22, thereby ensuring that the exhaust channel 22 is unobstructed and reliable. When the battery cell 10 is in thermal runaway, heat may be discharged in time from an outlet of the exhaust channel 22 without affecting other battery cells 10.

In some other implementations, when the battery cell 10 in the battery pack 100 is in thermally runaway, high-temperature substances are sprayed onto the connecting bottom plate 30. The connecting bottom plate 30 may absorb a part of the high-temperature substances to prevent the supporting surface 41 of the lower box assembly 40 from being penetrated through and prevent the battery pack 100 from exploding. When the supporting surface 41 is not penetrated through, the connecting bottom plate 30 may further reduce bouncing of high-temperature substances onto the insulated holder 20, preventing the insulated holder 20 from softening due to high temperature and then from collapsing and blocking the exhaust channel 22.

In addition, the holder assembly 100 may further include an upper sealing cover 60, a cold plate, a high-voltage assembly, a battery management system (battery management system, BMS), a thermal management system, an insulation protection, or other structures (not shown in the figure). Details are not described herein.

Refer to FIG. 6. A vehicle 200 in an implementation of this application includes a holder assembly 100 according to any one of the foregoing implementations.

In the holder assembly 100 and the vehicle 200 in the implementation of this application, the holder assembly 100 includes an insulated holder 20 and a connecting bottom plate 30. The insulated holder 20 includes accommodating grooves 21 and exhaust channels 22 in communication with the accommodating grooves 21. The accommodating groove 21 is used for arrangement of a battery cell 10. The exhaust channel 22 is adapted to correspond to an explosion-proof valve of the battery cell 10. The connecting bottom plate 30 is connected to the insulated holder 20. The connecting bottom plate 30 closes the exhaust channel 22 on a side, away from the battery cell 10, of the insulated holder 20. In this way, the added connecting bottom plate 30 may close the exhaust channel 22 from below, which prevents an adhesive from entering the exhaust channel 22 directly from below the insulated holder 20, and also prevents the adhesive from entering the exhaust channel 22 from a gap between the battery cell 10 and the insulated holder 20, thereby ensuring that the explosion-proof valve can be opened and heat can be smoothly discharged through the exhaust channel 22, and improving safety performance of the holder assembly 100.

Specifically, the vehicle 200 further includes a vehicle body 201. The battery pack 202 may be disposed on the vehicle body 201. In implementations of this application, a mounting position of the holder assembly 100 on the vehicle body 201 is not limited, to meet different requirements. In addition, in implementations of this application, specific types of the vehicle 200 are not limited. As long as the holder assembly 100 of this application is installed on the vehicle body 201, the vehicle 200 may be an electric vehicle or a hybrid vehicle to meet different requirements.

In the description of the implementations of this application, the terms "first" and "second" are merely intended for a purpose of description, and should not be understood as an indication or implication of relative importance or implicit indication of a quantity of indicated technical features. Therefore, a feature limited by "first", "second" may explicitly or implicitly include one or more features. In the description of the implementations of this application, "a plurality of" means two or more, unless otherwise explicitly and specifically defined.

In the description of this specification, descriptions referring to the terms "one implementation", "some implementations", "exemplary implementations", "examples", "specific examples" or "some examples" mean that specific features, structures, materials or characteristics described in connection with the implementations or example are included in at least one implementation or example of this application. In this specification, the schematic representations of the foregoing terms do not necessarily refer to the same implementation or example. Moreover, specific features, structures, materials, or characteristics described may be combined in any one or more implementations or examples in a suitable manner.

Although the implementations of this application have been shown and described above, it may be understood that the foregoing implementations are examples and are not to be construed as a limitation on this application. Those of ordinary skill in the art may change, modify, replace and vary the foregoing implementations within the scope of this application.

## Claims

1. A holder assembly (100), for a battery pack (202), comprising:
an insulated holder (20), comprising accommodating grooves (21) and exhaust channels (22) in communication with the accommodating grooves (21), wherein the accommodating groove (21) is arranged to accommodate a battery cell (10), and the exhaust channel (22) is adapted to correspond to an explosion-proof valve of the battery cell (10); and
a connecting bottom plate (30), wherein the connecting bottom plate (30) is connected to the insulated holder (20), and the connecting bottom plate (30) closes the exhaust channel (22) on a side of the insulated holder (20), away from the battery cell (10).

2. The holder assembly (100) according to claim 1, wherein the exhaust channels (22) comprise vertical channels (221) and horizontal channels (222) in communication with the vertical channels (221), the vertical channels (221) are in one-to-one communication with the accommodating grooves (21), the vertical channels (221) are in communication with the accommodating grooves (21), and the plurality of the vertical channels (221) are in communication with the horizontal channels (222).

3. The holder assembly (100) according to claim 1 or 2, wherein the insulated holder (20) comprises gap holes (23), along an arrangement direction of the insulated holder (20) and the connecting bottom plate (30), the gap hole (23) penetrates through the insulated holder (20), and the gap hole (23) is correspondingly disposed in a gap between adjacent battery cells (10).

4. The holder assembly (100) according to claim 3, wherein the connecting bottom plate (30) comprises aperture regions (33), along the arrangement direction of the insulated holder (20) and the connecting bottom plate (30), the aperture region (33) penetrates through the connecting bottom plate (30), and the aperture region (33) is in communication with the gap hole (23).

5. The holder assembly (100) according to claim 4, wherein an area of the aperture region (33) is greater than or equal to that of the gap hole (23).

6. The holder assembly (100) according to claim 4, wherein neither the gap hole (23) nor the aperture region (33) is in communication with the exhaust channel (22).

7. The holder assembly (100) according to any one of claims 3 to 6, wherein the insulated holder (20) further comprises a plurality of protrusions (24), the adjacent protrusions (24) cooperate to form the accommodating grooves (21), and the gap hole (23) is formed on the protrusion (24).

8. The holder assembly (100) according to any one of claims 1 to 7, wherein the connecting bottom plate (30) is a thermal insulation plate and/or an electrical insulation plate.

9. The holder assembly (100) according to any one of claims 1 to 8, wherein a size of the accommodating groove (21) is the same as that of the battery cell (10).

10. A battery pack (202), comprising battery cells (10) and the holder assembly (100) according to any one of claims 1 to 9, wherein the battery cells (10) are disposed on the holder assembly (100).

11. The battery pack (202) according to claim 10, wherein the battery pack (202) further comprises a lower box assembly (40), the connecting bottom plate (30) comprises a first side (31) and a second side (32) facing away from each other, the first side (31) faces the explosion-proof valves, the second side (32) faces an upper surface of the lower box assembly (40), the lower box assembly (40) comprises a supporting surface (41), the supporting surface (41) is attached to the second side (32), and flatness of the supporting surface (41) is less than or equal to 3 mm.

12. The battery pack (202) according to claim 10 or 11, wherein the battery pack (202) further comprises polyurethane foam (50), and the polyurethane foam (50) is filled in a gap between adjacent battery cells (10).

13. A vehicle (200), comprising the battery pack (202) according to any one of claims 10 to 12.
